# EUROPÄISCHE PATENTSCHRIFT

(11) **EP 2 185 370 B1**
(45) Veröffentlichungstag und Bekanntmachung des Hinweises auf die Patenterteilung: **06.11.2013**
(21) Anmeldenummer: 08802986.3
(22) Anmeldetag: 08.08.2008
(51) Int. Cl.: B60C 23/00, B60W 40/12, B60W 50/00

(54) **VERFAHREN UND EINRICHTUNG ZUR ANPASSUNG EINES FAHRDYNAMIKSYSTEMS IN EINEM KRAFTFAHRZEUG**
METHOD AND DEVICE FOR ADJUSTING OF A DRIVING DYNAMICS SYSTEM IN A MOTOR VEHICLE
PROCÉDÉ ET DISPOSITIF POUR ADAPTER UN SYSTÈME DE DYNAMIQUE DE VÉHICULE DANS UN VÉHICULE AUTOMOBILE

(30) Priorität: 29.08.2007 DE 102007040984; 08.08.2008 DE 102008036986
(43) Veröffentlichungstag der Anmeldung: 19.05.2010
(73) Patentinhaber: Continental Teves AG & Co. oHG, 60488 Frankfurt (DE)
(72) Erfinder: STÄHLIN, Ulrich, 65670 Eschborn (DE)
(86) Internationale Anmeldenummer: PCT/EP2008/060479
(87) Internationale Veröffentlichungsnummer: WO 2009/027208

(56) Entgegenhaltungen:
- WO-A-02/057099
- WO-A-2004/068424
- DE-A1- 19 937 078
- US-A1- 2003 050 743
- US-A1- 2005 256 614
- US-B1- 6 490 513
- US-B1- 6 658 927

## Beschreibung

Die vorliegende Erfindung betrifft ein Verfahren sowie eine Einrichtung zur Anpassung eines Fahrdynamiksystems in einem Kraftfahrzeug, bei dem über Sensoren messtechnisch ermittelte fahrdynamische Daten durch eine Stellsignalvorgabeeinheit nach Maßgabe von hinterlegten fahrzeugspezifischen Parametern signalverarbeitet werden, wodurch Stellsignale für Aktuatoren zur aktiven Korrektur der Fahrdynamik des Kraftfahrzeuges erzeugt werden. Weiterhin betrifft die Erfindung auch ein das erfindungsgemäße Verfahren umsetzendes Computerprogrammprodukt.

In der Kraftfahrzeugtechnik hat moderne Elektronik in zunehmendem Maße Eingang gefunden. Brennstoffeinspritzung und Zündung erfolgen meist elektronisch und gleiches gilt für Fahrdynamiksysteme. Fahrdynamiksysteme, welche nach heutigem Standard in allen Fahrzeugklassen vorhanden sind, dienen vornehmlich zur Aufrechterhaltung der Fahrstabilität eines Kraftfahrzeuges und berücksichtigen im allgemeinen den querdynamischen und längsdynamischen Zustand eines Kraftfahrzeuges. Dieser Zustand soll durch aktive Eingriffe in Lenkung, Bremsung und/oder Antrieb des Kraftfahrzeuges geeignet beeinflusst werden, um die Fahrstabilität in insbesondere kritischen Situationen sicherzustellen, damit das Fahrzeug für den Fahrer stets beherrschbar bleibt. Für einen solchen aktiven Eingriff auf Fahrzeugbaugruppen erzeugt das Fahrdynamiksystem eines Kraftfahrzeuges nach Maßgabe eines elektronischen Stabilisierungsprogramms (ESP) und dergleichen geeignet Stellsignale für Aktuatoren. Bisher werden Fahrdynamiksysteme mit einem festen Satz an Parametern ausgeliefert, der über die gesamte Lebenszeit des Fahrzeugs unverändert bleibt.

Aus der DE 10 2004 024 545 A1 geht ein Verfahren und eine Einrichtung zum Regeln der Fahrzeugdynamik eines Fahrzeuges hervor. Es wird hier eine Lenkbewegung nach Maßgabe einer Stellgröße vorgenommen, die in Abhängigkeit einer Abweichung zwischen einem vorgegebenen Sollwert und einem erfassbaren Istwert einer Fahrzustandsgröße berechnet wird. Das Verfahren zeichnet sich dadurch aus, dass wenigstens ein Zugehörigkeitsgrad eines erfassten Wertes eines von einem Fahrer eingestellten Lenkwinkels zu einer vorgegebenen Unschärfenmenge ermittelt wird und ein Wert der Stellgröße in Abhängigkeit des Zugehörigkeitsgrades verändert wird. Hierdurch können bei einem Fahrdynamiksystem vorgenommene Lenkeingriffe möglichst harmonisch auf Lenkbewegungen des Fahrers abgestimmt werden, so dass diese nicht störend wahrgenommen werden.

Die US 2003050743 offenbart ein Verfahren und ein System, das zur Überwachung von Reifendrücken geeignet ist. Das Verfahren bildet durch eine Differenzbildung vom ermittelten Ist-Druck zu einem Solldruck eine Information, die im Fahrzeug dann zur Anzeige gebracht wird. Der nächstliegende Stand der Technik ist in der US 2003 050 743 zu sehen.

Die US6490513 offenbart generell ein Zertifizierungsvorgänge bei der dem Fachmann angegeben wird wie eine gesicherte Verbindung zur Datenübertragung hergestellt werden kann.

Derartige Fahrdynamiksysteme werden gewöhnlich mit einmalig fest programmierten Parametern ausgeliefert, welche auf die Fahrzeugeigenschaften abgestimmt sind. Dieser Satz an Parametern bleibt über die gesamte Lebenszeit des Fahrzeuges unverändert. Allerdings können sich Fahrzeugeigenschaften während der Lebenszeit des Fahrzeuges ändern. So verhält sich das Fahrzeug abhängig von jahreszeitbedingten Witterungsverhältnissen im Sommer anders als im Winter. In beispielsweise Bergregionen mit Serpentinenstrassen wird mehr Sicherheit durch ein hart ausgelegtes Fahrwerk gewonnen, so dass die Fahrzeugeigenschaften auch regional unterschiedlich sein können. Weiterhin besteht die Möglichkeit, dass sich die Fahrzeugeigenschaften durch nachträgliche Anbringung von Tunningteilen, wie Spoilern und dergleichen, ändern.

Einen besonderen Einfluss auf sich ändernde Fahrzeugeigenschaften nimmt die Bereifung. Beim Abrollen eines Reifens verändert dieser ständig und dynamisch seine Form, da die Auflagefläche des Reifens auf der Straße zusammengedrückt wird. Dieses Walken des Reifens führt zu einer Temperaturerhöhung. Außerdem verändert sich der Reifendruck je nach Oberflächenbeschaffenheit der Straße. Eine größere Zuladung erhöht den Druck in allen Reifen des Fahrzeuges. Bei Kurvenfahrten erhöht sich der Druck in den kurvenäußeren Reifen. Auch stellen sich Druckänderungen ein, wenn der Reifen über eine raue Straße, Buckelpiste oder über eine Unebenheit fährt. Für den Reifenhersteller ist es wesentlich dabei, die Temperatur- und Druckänderungen zu messen, um die Eigenschaften verbessern zu können. Erfolgt ein Reifentausch, insbesondere von Sommer- auf Winterbereifung, so ändern sich damit ebenfalls die Fahrzeugeigenschaften, insbesondere im Hinblick auf Kurvenstabilität, Bremsweg und zulässigem Maximalgeschwindigkeit.

Die bislang durchgeführte statische Parametrierung des Fahrdynamiksystems eines Kraftfahrzeugs geht auf all diese Änderungen nicht ein.

Es ist daher die Aufgabe der vorliegenden Erfindung, Fahrzeugdynamiksysteme während der Lebenszeit des Fahrzeuges auf geänderte Fahrzeugeigenschaften einstellen zu können.

Die Aufgabe wird verfahrenstechnisch gelöst durch die Merkmale des Anspruchs 1 im Hinblick auf eine hierzu korrespondierende elektronische Einrichtung wird die Aufgabe gelöst durch Anspruch 5. Die jeweils rückbezogenen abhängigen Ansprüche geben vorteilhafte Weiterbildungen der Erfindung wieder.

Im Hinblick auf ein hiermit im Zusammenhang stehendes
Computerprogrammprodukt sowie einen dieses aufweisenden Datenträger wird auf die Ansprüche 9 bzw. 10 verwiesen.

Die Erfindung schließt die technische Lehre ein, dass die in der Stellsignalvorgabeeinheit des Fahrdynamiksystems hinterlegten Parameter des Fahrdynamikprogramms über eine Kommunikationsschnittstelle von außen her änderbar sind, um das Fahrdynamiksystem an Fahrzeugänderungen anzupassen, wobei für die Änderung mindestens eines der hinterlegten Parameter eine externe Kommunikationseinheit eine durch Kryptographieverfahren auf allen Ebenen der Kommunikation verschlüsselte Kommunikationsverbindung aufbaut.

Der Vorteil der erfindungsgemäßen Lösung liegt darin, dass die Parametrierung des Fahrdynamikprogramms, welches softwaretechnisch implementiert ist, zielgerichtet änderbar ist, um damit das Fahrdynamiksystem an Fahrzeugänderungen anzupassen. Hierdurch wird ein höherer Grad an Sicherheit des Kraftfahrzeuges über dessen Lebenszeit erzielt. Damit eine derartige sicherheitssensible Parameteränderung nicht von unbefugter Stelle aus durchgeführt werden kann, wird in diesem Zusammenhang vorgeschlagen, hierfür auf eine verschlüsselte Kommunikationsverbindung zurückzugreifen. Somit sind nur autorisierte Personen mit geeigneten technischen Geräten in der Lage, die sicherheitssensible Parametrierung eines Fahrdynamiksystems in einem Kraftfahrzeug zu ändern.

Gemäß einer die erfindungsgemäße Einrichtung verbessernden Maßnahme wird vorgeschlagen, dass die fahrzeuginterne Kommunikationsschnittstelle Bestandteil einer an die Signalvorgabeeinheit des Fahrdynamiksystems anschließbaren nachträglich einbaubaren internen Kommunikationseinheit ist. Um einen nachträglichen Einbau an die Stellsignalvorgabeeinheit zu ermöglichen, ist neben einer an geeigneter Stelle im Fahrzeug vorgesehenden Montagehaltung für die Kommunikationseinheit auch eine möglichst kurze elektrische Leitungsverbindung herzustellen.

Damit sich die Parameter des Fahrdynamiksystems komfortabel von geeignetem Fachpersonal ändern lassen, wird vorgeschlagen, dass die mit der fest installierten internen Kommunikationseinheit seitens des Fahrzeuges vorzugsweise drahtlos kommunizierende externe Kommunikationseinheit als ein Handheld-Terminal oder ein mobiler Personalcomputer (PC) ausgebildet ist. Derartige elektronische Geräte sind beispielsweise im Werkstattbetrieb gebräuchlich und lassen sich in einfacher Weise um die erfindungsgemäßen Funktionen erweitern.

Daneben ist es jedoch auch denkbar, dass Fahrzeugnutzer selbst über vorzugsweise kabellose Kommunikationsendgeräte, wie Mobilfunkendgeräte oder PDA (Personal Digital Assistent) eine Parameteränderung vornehmen. Dies setzt voraus, dass eine Software des Fahrzeugherstellers verwendet und ein geeignetes Authentifizierungsverfahren angewendet wird, damit den Sicherheitsanforderungen entsprochen wird. Beispielsweise könnte der Fahrzeuginhaber einen zu neuen Reifen mitgelieferten Zahlencode in seine externe Kommunikationseinheit eingeben, damit sich das Fahrdynamiksystem auf die mit den neuen Reifen geänderte Fahrdynamik des Fahrzeugs anpasst.

Weiterhin ist es auch denkbar, Parameteränderungen automatisch von durch den Fahrzeughersteller zertifizierten Orten oder Geräten durchzuführen. Beispielsweise kann ein Update von Parametern beim Eindringen des Bereichs einer Vertragswerkstatt automatisch erfolgen. Es ist auch denkbar, dass eine Barke am Straßenrand eine entsprechende Elektronik enthält, welche als externe Kommunikationseinheit fungiert. Ferner könnte auch in neuen Reifen ein Elektronikmodul implementiert sein, beispielsweise eine Art Transponder, welcher als externe Kommunikationseinheit dient.

All die vorgenannten und andere für den Fachmann in Betracht kommenden drahtlos kommunizierenden elektronischen Geräte stellen die Verbindung zur internen Kommunikationseinheit vorzugsweise durch eine standardisierte mobile Nahbereichskommunikationsverbindung her, beispielsweise nach dem Bluetooth-Standard, dem ZigBee-Standard oder dem WLAN-Standard.

Fahrzeugänderungen, welche eine Änderung der Parameter des Fahrdynamiksystems hervorrufen können, umfassen neben einem bereits vorstehend erwähnten Reifenwechsel auch Fahrzeugänderungen, welche mit einer Anbringung von Tuinningteilen verursacht werden. Dies kommt dann in Betracht, wenn nachträglich installierte Teile das Fahrverhalten des Fahrzeugs ändern, wie beispielsweise die Nachrüstung eines Spoilers oder auch eines Gasantriebs. Daneben wirken auch äußere Einflüsse auf die Fahrdynamik des Fahrzeugs ein. Beispielsweise könnte mit der erfindungsgemäßen Lösung ein Jahreszeitwechsel eine Änderung der Parameter des Fahrdynamiksystems auslösen, damit das Fahrdynamiksystem Sommer- und Wintereinflüsse berücksichtigt.

Das erfindungsgemäße Verfahren wird vorzugsweise in Form eines Computerprogrammprodukts umgesetzt und, so dass die Routine zur Änderung der Parameter des Fahrdynamiksystems durch entsprechende in der Software hinterlegte Steuerungsbefehle umgesetzt sind. Die Software läuft dabei innerhalb der Stellsignalvorgabeeinheit des Fahrdynamiksystems und ist - genauso wie die hier hinterlegten Parameter - dort abgespeichert.

Weitere, die Erfindung verbessernden Maßnahmen werden gemeinsam mit der Beschreibung eines bevorzugten Ausführungsbeispiels der Erfindung anhand der Figuren näher dargestellt. Es zeigt:
- Figur 1: ein schematische Darstellung einer Einrichtung zur Anpassung eines Fahrdynamiksystems in einem Fahrzeug, und
- Figur 2: ein Datenflussdiagramm zur Veranschaulichung in der Verfahrensschritte für eine Anpassung des Fahrdynamiksystems.

Die Darstellungen in den Figuren sind schematisch und nicht maßstäblich.

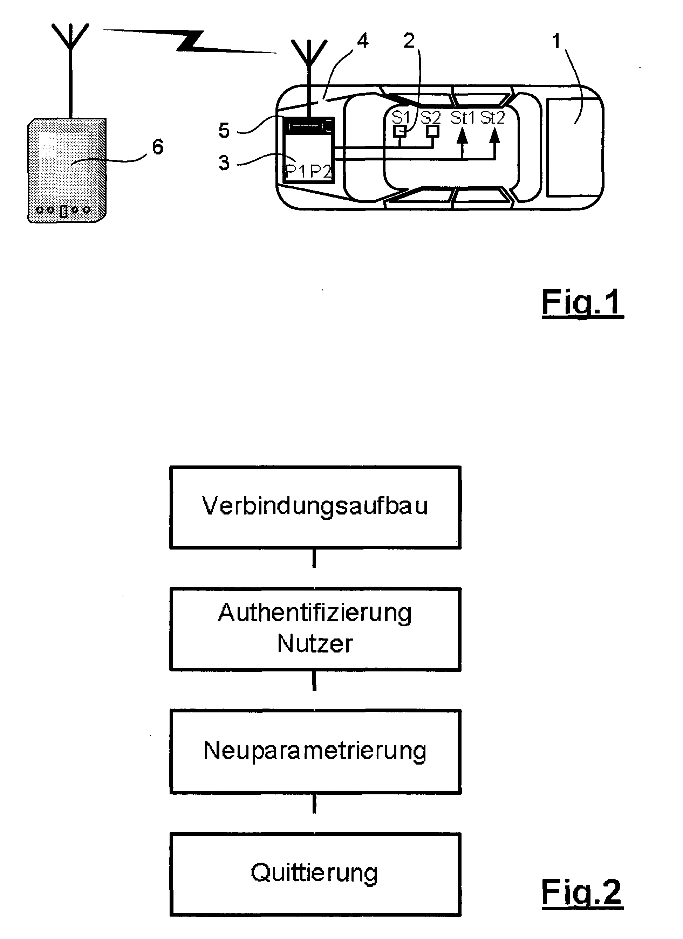

Gemäß Figur 1 werden bei einem Kraftfahrzeug 1 über diverse Sensoren 2, wie Beschleunigungssensor, Giermomentsensor und dergleichen, fahrdynamische Daten S1, S2 gesammelt und eingangsseitig einer Stellsignalvorgabeeinheit 3 zugeführt. Die Stellsignalvorgabeeinheit 3 umfasst einen Mikrokontroller mit zugeordnetem Speicher, in dem eine Software hinterlegt ist, womit die Stellsignalvorgabeeinheit 3 in der Lage ist, nach Maßgabe von im Speicher hinterlegten fahrzeugspezifischen Parametern die eingangsseitig zugeführten Daten S1, S2 in Stellsignale St₁, St₂ zu berechnen, welche der aktiven Korrektur der Fahrdynamik des Kraftfahrzeuges 1 dienen. Dies erfolgt, in dem - hier nicht weiter dargestellte - Aktuatoren, wie Fahrwerksdämpfung, Bremsung, etc., abhängig von den über die Sensoren 2 erfassten Daten S1, S2 angesteuert werden.

Die Stellsignalvorgabeeinheit 3 des Fahrdynamiksystems ist mit einer Kommunikationsschnittstelle 4 ausgestattet, die Bestandteil einer an die Stellsignalvorgabeeinheit 3 angeschlossenen Kommunikationseinheit 5 ist. Über diese Kommunikationsschnittstelle 4 sind die innerhalb der Stellsignalvorgabeeinheit 3 hinterlegten Parameter P1, P2 von außen her änderbar. Mit dieser Änderung lässt sich das Fahrdynamiksystem an Fahrzeugänderungen anpassen.

Zur Änderung der in der Stellsignalvorgabeeinheit 3 hinterlegten Parameter P1, P2 steht die fahrzeuginterne Kommunikationsschnittstelle 4 mit einer externen Kommunikationseinheit 6 in Verbindung. Die externe Kommunikationseinheit 6 ist in diesem Ausführungsbeispiel als Mobilfunkendgerät ausgebildet. Zwischen der externen Kommunikationseinheit 6 und der fahrzeuginternen Kommunikationsschnitte 4 ist eine drahtlose, verschlüsselte Kommunikationsverbindung 7 aufbaubar. Durch die Verschlüsselung der Kommunikationsverbindung 7 wird unbefugter Zugriff auf die Parametrierung des Fahrdynamiksystems verhindert. Hierzu erfolgt die Kommunikation auf allen Ebenen durch geeignete Kryptographieverfahren.

Gemäß Figur 2 erfolgt die Anpassung des Fahrdynamiksystems des Kraftfahrzeuges 1 durch folgende Schritte:

Zunächst wird hier über WLAN eine drahtlose Kommunikationsverbindung vom externen Kommunikationsgerät zur Stellsignalvorgabeeinheit des Fahrdynamiksystems im Kraftfahrzeug hergestellt (Verbindungsaufbau). Nachfolgend gibt der Nutzer der externen Kommunikationseinheit einen Zahlencode ein, um sich authentifizieren (Authentifizierung Nutzer). Durch diese Maßnahme wird unbefugter Zugriff auf das Fahrdynamiksystem im Kraftfahrzeug ausgeschlossen. Anschließend erfolgt per verschlüsselter Datenübertragung von der externen Kommunikationseinheit zur Stellsignalvorgabeeinheit die Änderung der dort hinterlegten Parameter (P1, P2), in dem die ursprünglichen Parameter überschrieben werden (Neuparametrierung). Schließlich quittiert die Stellsignalvorgabeeinheit durch eine Rückantwort an die externe Kommunikationseinheit die erfolgreiche Neuparametrierung (Quittung).

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, eine andere mobile Nahbereichskommunikationsverbindung, zwischen der externen Kommunikationseinheit und der fahrzeuginternen Stellsignalvorgabeeinheit aufzubauen, beispielsweise per Bluethooth-Verbindung. Als eine diese Nahbereichskommunikationsverbindung nutzende externe Kommunikationseinheit können auch andere Geräte, wie PDA, PC und dergleichen verwendet werden, die über geeignete drahtlos Kommunikationsmittel verfügen.

Mit der erfindungsgemäßen Lösung ist es möglich, durch die Kommunikationsverbindung eines Fahrdynamiksystems mit der Außenwelt dessen

Parametrierung zu ändern. Hierdurch lassen sich Fahrdynamiksysteme von Kraftfahrzeugen besser an Fahrzeugänderungen anpassen, wie Wechsel der Bereifung, Wechsel der Jahreszeit, Wechsel der bevorzugten Einsatzregion des Fahrzeugs, Anbringung von Tuinningteilen oder Wechsel des Motors.

### Bezugszeichenliste

- 1: Kraftfahrzeug
- 2: Sensor
- 3: Stellsignalvorgabeeinheit
- 4: Kommunikationsschnittstelle
- 5: Kommunikationseinheit, intern
- 6: Kommunikationseinheit, extern
- 7: Kommunikationsverbindung

- S₁ ... Sₙ: fahrzeugdynamische Daten
- P1 ... Pn: fahrzeugspezifische Parameter
- St₁ ...Stₙ: Stellsignaleaktuatoren

## Patentansprüche

1. Verfahren zur Anpassung eines Fahrdynamiksystems in einem Kraftfahrzeug (1), bei dem über Sensoren (2) messtechnisch ermittelte fahrdynamische Daten (S1 ... Sn) durch eine Stellsignalvorgabeeinheit (3) nach Maßgabe von hinterlegten fahrzeugspezifischen Parametern (P1 ... Pn) signalverarbeitet werden, wodurch Stellsignale (St1 ... Stn) zur aktiven Korrektur der Fahrdynamik des Kraftfahrzeuges (1) erzeugt werden, für die Änderung mindestens eines der hinterlegten Parameter (P1 .... Pn) eine durch Kryptographieverfahren auf allen Ebenen der Kommunikation verschlüsselte Kommunikationsverbindung (7) mit einer externen Kommunikationseinheit (6) aufgebaut wird
**dadurch gekennzeichnet,**
**dass** die in der Stellsignalvorgabeeinheit (3) des Fahrdynamiksystems hinterlegten Parameter (S1 ... Sn) über eine Kommunikationsschnittstelle (4) von außen her geändert werden, um das Fahrdynamiksystems an Fahrzeugänderungen anzupassen, wobei mittels über WLAN eine drahtlose Kommunikationsverbindung vom externen Kommunikationsgerät zur Stellsignalvorgabeeinheit des Fahrdynamiksystems im Kraftfahrzeug hergestellt wird, nachfolgend der Nutzer der externen Kommunikationseinheit einen Zahlencode eingibt, um sich authentifizieren, anschließend per verschlüsselter Datenübertragung von der externen Kommunikationseinheit zur Stellsignalvorgabeeinheit die Änderung der dort hinterlegten Parameter (P1, P2), in dem die ursprünglichen Parameter überschrieben werden und anschließend die Stellsignalvorgabeeinheit durch eine Rückantwort an die externe Kommunikationseinheit die erfolgreiche Neuparametrierung quittiert wird und die Änderung der in der Stellsignalvorgabeeinheit (3) hinterlegten Parameter (S1 .... Sn) automatisch an durch den Fahrzeughersteller zertifizierten Orten oder Geräten durchgeführt wird.

2. Verfahren nach Anspruch 1,
**dadurch gekennzeichnet, dass** die Kommunikationsverbindung (7) kabellos als Mobilfunk-Kommunikationsverbindung oder mobile Nahbereichskommunikationsverbindung durchgeführt wird.

3. Verfahren nach Anspruch 1 oder 2,
**dadurch gekennzeichnet, dass** die mobile Nahbereichskommunikationsverbindung als Bluetooth-, ZigBee- oder WLAN-Verbindung durchgeführt wird.

## Claims

1. Method for adapting a driving dynamics system in a motor vehicle (1), in which driving dynamics data (S1 ... Sn) determined by measuring by means of sensors (2) are processed using signals by means of an actuation signal-predefining unit (3) in accordance with stored vehicle-specific parameters (P1 ... Pn), as a result of which actuation signals (St1 ... Stn) for actuably correcting the driving dynamics of the motor vehicle (1) are generated, and in order to change at least one of the stored parameters (P1 ... Pn) a communication link (7), encrypted by cryptography methods at all levels of the communication, is set up to an external communication unit (6),
**characterized**
**in that** the parameters (S1 ... Sn) stored in the actuation signal-predefining unit (3) of the driving dynamics system are changed from the outside via a communication interface (4) in order to adapt the driving dynamics system to changes at the vehicle, wherein a wireless communication link from the external communication device to the actuation signal-predefining unit of the driving dynamics system is established in the motor vehicle by means of WLAN, and subsequently the user of the external communication unit inputs a numerical code in order to identify himself, and subsequently, by encrypted data transmission from the external communication unit to the actuation signal-predefining unit, the change in the parameters (P1, P2) stored there by overwriting the original parameters and the actuation signal-predefining unit subsequently acknowledging the successful re-parameterization by a response to the external communication unit, and the change in the parameters (S1 ... Sn) stored in the actuation signal-predefining unit (3) being automatically carried out at locations or devices certified by the vehicle manufacturer.

2. Method according to Claim 1,
**characterized in that** the communication link (7) is implemented in a cableless fashion as a mobile radio communication link or mobile close-range communication link.

3. Method according to Claim 1 or 2, **characterized in that** the mobile close-range communication link is implemented as a Bluetooth, ZigBee or WLAN link.

## Revendications

1. Procédé d'adaptation d'un système de dynamique de conduite dans un véhicule automobile (1), dans lequel des données de dynamique de conduite (S1 ... Sn) calculées par le biais d'une technique de mesure utilisant des capteurs (2) sont traitées sur le plan du signal par une unité de sélection de signal de réglage (3) en fonction de paramètres spécifiques au véhicule (P1 ... Pn) mémorisés, des signaux de réglage (St1 ... Stn) étant produits pour réaliser la correction active de la dynamique de conduite du véhicule automobile (1), une liaison de communication (7) codée sur tous les plans de la communication par le biais de procédés de cryptographie étant créée avec une unité de communication (6) externe en vue de modifier au moins un des paramètres (P1 .... Pn) mémorisés ;
**caractérisé en ce que** :
les paramètres (S1 ... Sn) mémorisés dans l'unité de sélection de signal de réglage (3) du système de dynamique de conduite sont modifiés depuis l'extérieur par le biais d'une interface de communication (4), pour adapter le système de dynamique de conduite aux changements de véhicule, une liaison de communication sans fil étant établie par WLAN à partir de l'appareil de communication externe en direction de l'unité de sélection de signal de réglage du système de dynamique de conduite placé dans le véhicule automobile, après saisie, par l'utilisateur de l'unité de communication externe, d'un code numérique d'identification, puis les paramètres (P1, P2) modifiés mémorisés dans ladite unité viennent remplacer les paramètres d'origine par le biais d'une transmission de données codée se produisant de l'unité de communication externe vers l'unité de sélection de signal de réglage et puis l'unité de sélection de signal de réglage est déconnectée par le biais d'un retour envoyé à l'unité de communication externe indiquant que le nouveau paramétrage a été effectué avec succès et la modification des paramètres (S1 .... Sn) mémorisés dans l'unité de sélection de signal de réglage (3) est automatiquement réalisée sur les sites ou appareils certifiés par le constructeur automobile.

2. Procédé selon la revendication 1, **caractérisé en ce que** la liaison de communication (7) est réalisée sans fil sous la forme d'une liaison de communication de téléphonie mobile ou une liaison de communication mobile par radiobalises.

3. Procédé selon la revendication 1 ou 2, **caractérisé en ce que** die liaison de communication mobile par radiobalises prend la forme d'une liaison Bluetooth, ZigBee ou WLAN.
